# EUROPÄISCHE PATENTANMELDUNG

(11) **EP 1 832 171 A2**
(43) Veröffentlichungstag der Anmeldung: **12.09.2007**
(21) Anmeldenummer: 07004130.6
(22) Anmeldetag: 28.02.2007
(51) Int. Cl.: A21D 13/00, A21D 8/06

(54) **Verfahren zur Herstellung von Brötchen**

(30) Priorität: 11.03.2006 DE 102006011424
(71) Anmelder: Ulrich Gerhardt Consulting GmbH, 69518 Absteinach (DE)
(72) Erfinder: Gerhardt, Ulrich, 69518 Absteinach (DE)
(74) Vertreter: Schwanhäusser, Gernot

(57) **Zusammenfassung**

Bei einem Verfahren zur Herstellung von Brötchen wird zunächst ein Brötchenteig zubereitet, aus dem dann durch Portionierung und Formgebung Teiglinge (16) hergestellt werden. Nach dem Gären der Teiglinge (16) werden diese z.B. in einer Konditionieranlage abgesteift. Erfindüngsgemäß werden die abgesteiften Teiglinge (16) nicht in einem Ofen gebacken oder gedämpft, sondern derart fritiert; daß die Teiglinge vollständig in Fritierfett (12) untergetaucht sind. Auf diese Weise erhält man Brötchen mit einer besonders gleichmäßigen, knusprigen Kruste und dennoch saftiger Krume innerhalb sehr kurzer Backzeiten.

## Beschreibung

Die Erfindung betrifft ein Verfahren zur Herstellung von Brötchen mit folgenden Schritten:
a) Zubereiten eines Brötchenteigs;
b) Herstellen von Teiglingen durch Portionierung und Formgebung des Brötchenteigs;
c) Gären der Teiglinge.

Nach einem derartigen Verfahren werden üblicherweise Brötchen hergestellt. Dabei schließt sich an den Schritt c) das Backen oder Dämpfen der Teiglinge in einem Backofen an.

Nach dem bekannten Verfahren hergestellte Brötchen haben allerdings die Eigenschaft, daß ihre Kruste anfangs relativ stark splittert und deswegen beim Verpacken, Schneiden und Verzehr viele Krümel entstehen. Andererseits verändert sich die Beschaffenheit der Kruste relativ schnell, was im allgemeinen unerwünscht ist.

Aufgabe der Erfindung ist es deswegen, ein Verfahren der eingangs genannten Art derart weiterzuentwickeln, daß die Kruste der Brötchen verbesserte Eigenschaften aufweist.

Erfindungsgemäß wird diese Aufgabe bei einem Verfahren der eingangs genannten Art dadurch gelöst, daß die Teiglinge, und zwar vorzugsweise in einer Konditionieranlage, zunächst abgesteift und die abgesteiften Teiglinge fritiert werden, wobei die Teiglinge vollständig in Fritierfett untergetaucht sind.

Anstelle also die Teiglinge in einem Ofen zu backen oder zu dämpfen, wie dies seit Jahrhunderten bei der Herstellung von Brötchen üblich ist, werden die Teiglinge erfindungsgemäß in Fritierfett fritiert. Die so hergestellten Brötchen haben eine über lange Zeit hinweg saftige und wenig splitternde Krume.

Da die Teiglinge vollständig in Fritierfett untergetaucht sind, entsteht kein umlaufender heller Rand, wie er für fettgebackenes Feingebäck wie etwa "Berliner" kennzeichnend und deswegen gewollt ist. Vielmehr erhält die Kruste durch das Untertauchen der Teiglinge im Fritierfett über deren gesamte Oberfläche hinweg eine vollkommen gleichmäßige Konsistenz und Farbe. Dies ist für Brötchen schon allein aus optischen Gründen wichtig. Auch beim Verzehr der Brötchen wird von den Verbrauchern gewünscht, daß die Brötchen überall eine gleichmäßig knusprige Kruste und dennoch eine saftige Krume haben.

Überraschenderweise erhält man trotz des Fritierens der Teiglinge Backwaren, die ansonsten die charakteristischen Eigenschaften von Brötchen haben und im wesentlichen auch wie herkömmliche Brötchen schmecken. Dies liegt vor allem' daran, daß die Brötchen, abgesehen vom Fritiervorgang, im wesentlichen in der herkömmlichen Weise hergestellt werden. So kann insbesondere ein normaler Brötchenteig verwendet werden, ohne daß dies zu einer besonders hohen Aufnahme des Fritierfetts führt. Herkömmlicher Brötchenteig zeichnet sich dadurch aus, daß er weniger als 10% Fett und weniger als 10% Zucker pro Kilogramm Mehl enthält. Verwendet wird meistens ein malziger oder gesäuerter Hefeteig, der im wesentlichen eifrei ist. Hierunter wird hier ein Eigehalt von weniger als einem Vollei pro Kilogramm Mehl verstanden.

Durch Abwandlung der herkömmlichen Rezepte für Brötchenteige ist es allerdings möglich, die Fettaufnahme der Teiglinge beim Fritieren weiter zu verringern.

Ein besonders guter Geschmack wird erzielt, wenn beim Fritieren.ein besonders geschmacksneutrales Fritierfett verwendet wird. Dadurch führt das von den Teiglingen während des Fritierens aufgenommene Fritierfett beim Verzehr nicht zu einem nennenswerten unerwünschten Beigeschmack. Geeignet sind in diesem Zusammenhang z.B. Fritierfette, die unter dem Markennamen Sonnetta® vertrieben werden.

Das Backen oder Dämpfen in einem Ofen ist lebensmittelrechtlich eine kennzeichnende Eigenschaft von Brötchen. Bei nach dem erfindungsgemäßen Verfahren hergestellten Brötchen ist ein Backen in einem Ofen allenfalls dann vorgesehen, wenn zunächst halbfritierten Brötchen später vollständig ausgebacken werden. Somit handelt es sich bei den nach dem erfindungsgemäßen Verfahren hergestellten Backwaren nicht um Brötchen im lebensmittelrechtlichen Sinne. Da die nach dem erfindungsgemäßen Verfahren hergestellten Backwaren aber sowohl in Aussehen als auch im Geschmack herkömmlichen Brötchen sehr ähnlich sind, werden die nach dem erfindungsgemäßen Verfahren hergestellten Backwaren auch im folgenden als Brötchen bezeichnet.

Der Erfinder hat ferner festgestellt, daß das Fritieren der Teiglinge auch dann Vorteile hat, wenn die Brötchen zunächst nur halbfritiert werden, um sie später nach einer Transport- oder Lagerzeit z.B. in kleineren Bäckereifilialen oder Privathaushalten vollständig in einem Ofen auszubacken. Halbfritierte Brötchen haben nämlich überraschenderweise die Eigenschaft, daß sie sich zwar beim Übereinanderstapeln in Tüten oder Behältern verformen, jedoch nehmen die Brötchen beim Fertigbacken im Ofen wieder ihre ursprüngliche Form an. Bei herkömmlichen halbgebackenen Brötchen sind die Verformungen beim Übereinanderstapeln hingegen bleibend, so daß die halbgebackenen Brötchen nur sehr vorsichtig gelagert und transportiert werden können. Wie bei herkömmlichen Brötchen können nach dem erfindungsgemäßen Verfahren hergestellte halbgebackene Brötchen natürlich auch zunächst tiefgefrören werden.

Das Fritieren der Teiglinge hat ferner den Vorzug, daß das Fritieren sehr viel weniger Zeit beansprucht als das Backen in einem Ofen. Versuche haben gezeigt, daß sich die Fertigstellungszeit um etwa 75% gegenüber dem Backen im Ofen verkürzt. Auf diese Weise lassen sich auch mit kleineren Fritieranlagen in kurzer Zeit eine sehr große Zahl von Brötchen herstellen.

Um zu gewährleisten, daß die Teiglinge in Schritt e) vollständig während des Fritierens untergetaucht sind und nicht nach oben aufschwimmen, wie dies etwa bei "Berlinern" der Fall ist, kann beispielsweise ein Rost verwendet werden, der zumindest mit seiner Unterseite in das Fritierfett eintaucht. Die Abstände der Stege oder Gitter des Rostes müssen so bestimmt sein, daß die Teiglinge nicht zwischen den Stegen oder Stäben hindurch auftauchen können.

Es hat sich gezeigt, daß die nach dem erfindungsgemäßen Verfahren hergestellten Brötchen besonders wenig Fritierfett aufnehmen, wenn die Teiglinge in Schritt d) bei Temperaturen zwischen etwa 6 °C und 12 °C abgesteift werden, und zwar weiter vorzugsweise über einen Zeitraum von mehr als einer Stunde, besser noch von mehr als fünf Stunden, hinweg.

Der Erfinder hat außerdem erkannt, daß sich mit dem erfindungsgemäßen Verfahren nicht nur Brötchen, sondern auch anderes Feingebäck herstellen läßt, das üblicherweise bislang in einem Ofen gebacken oder gedämpft wird. Vor allem solches Feingebäck, bei dem eine gleichmäßige Kruste und eine über lange Zeit saftige Krume gewünscht wird, läßt sich auch mit dem erfindungsgemäßen Verfahren herstellen. Ferner ist die Anwendung des Verfahrens nicht auf kleine Gebäckstücke beschränkt, sondern kann auch für größere Backwaren, z.B. Baguettes, in Betracht kommen.

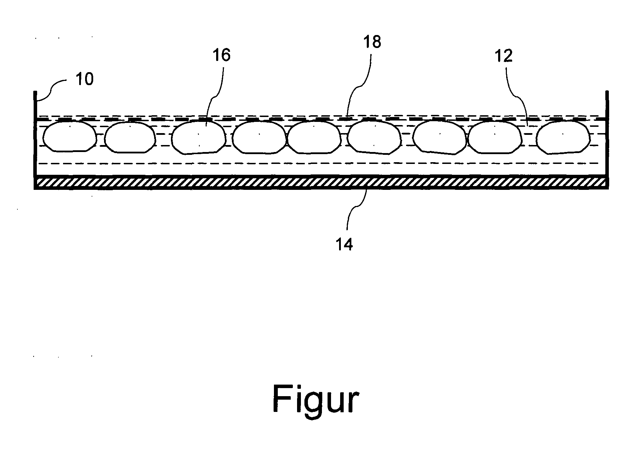

Weitere Vorteile und Merkmale der Erfindung ergeben sich aus der nachfolgenden Beschreibung eines Ausführungsbeispiels anhand der einzigen Figur, die einen vertikalen Schnitt durch eine Fritierpfanne zeigt.

Die mit 10 bezeichnete Fritierpfanne ist mit einem Fritierfett 12 gefüllt, das mit Hilfe eines in den Boden der Fritierpfanne 10 eingelassenen Heizgeräts 14 auf die zum Fritieren erforderliche Temperatur gebracht werden kann. Bei dem Fritierfett 12 handelt es sich vorzugsweise um ein sehr geschmäcksneutrales Fritierfett, wie dies beispielsweise unter dem Markennamen Sonnetta® vertrieben wird.

Wenn das Fritierfett 12 die erforderliche Fritiertemperatur erreicht hat, werden vorbereitete Teiglinge 16 in die Fritierpfanne 10 hineingegeben. Die Teiglinge 16 bestehen aus einem eifreien malzigen oder gesäuerten Hefeteig, wie er üblicherweise für die Herstellung von Brötchen verwendet wird. Um zu verhindern, daß die Teiglinge 16 während des Fritierens übermäßig viel Fritierfett 12 aufnehmen, können die bekannten Rezepturen für Brötchenteig etwas abgewandelt werden.

Aus dem zubereiteten Teig werden dann durch Portionierung und Formgebung die Teiglinge 16 vorbereitet, wie dies an sich im Stand der Technik im Zusammenhang mit der Herstellung von Brötchen bekannt ist. An die Herstellung der Teiglinge schließt sich ein Gärvorgang an, der vorzugsweise in einer warmen Umgebung mit erhöhter Luftfeuchtigkeit durchgeführt wird. Die gegärten Teiglinge werden dann in einer Konditionieranlage abgesteift, wodurch die Teiglinge eine glatte und kaum noch klebrige Oberfläche erhalten. Die Konditionierung erfolgt vorzugsweise bei einer Temperatur zwischen 6 °C und 12 °C und sollte wenigstens über 10 Minuten, besser aber über mehrere Stunden hinweg, durchgeführt werden.

Nach der Konditionierung sind die Teiglinge 16 für den Fritiervorgang bereit, wie er in der Figur gezeigt ist. Wenn die so vorbereiteten Teiglinge 16 in der gewünschten Zahl in die Fritierpanne 10 eingefüllt sind, wird von oben ein Rost 18 auf die Fritierpfanne 10 gesetzt und lösbar verriegelt. Der Rost 18 taucht dabei zumindest mit seiner Unterseite in das Fritierfett 12 ein. Die Teiglinge 16, die aufgrund ihres Luftanteils an sich auf dem Fritierfett 12 aufschwimmen wollen, werden durch den Rost 18 vollständig in das Fritierfett 12 untergetaucht, SO daß ihre gesamte Oberfläche gleichmäßig dem Fritierfett 12 ausgesetzt ist.

Sollen die Teiglinge 16 nur halbfritiert werden, so genügt eine Fritierzeit von wenigen, z.B. 3 bis 4, Minuten.

Beim vollständigen Fritieren erhöht sich diese Zeit geringfügig.

Am Ende des Fritiervorgangs wird der Rost 18 wieder entfernt, so daß die Brötchen aus der Fritierpfanne 10 entnommen werden können. Nach einer kurzen Abkühlphase können die Brötchen verzehrt werden. Die nach der Fertigstellung erhaltene knusprige Konsistenz der Kruste und ihre saftige Krume bewahren die Brötchen auch über viele Stunden hinweg.

## Patentansprüche

1. Verfahren zur Herstellung von Brötchen mit folgenden Schritten:
a) Zubereiten eines Brötchenteigs;
b) Herstellen von Teiglingen (16) durch Portionierung und Formgebung des Brötchenteigs;
c) Gären der Teiglinge (16);
**gekennzeichnet durch** folgende weiteren Verfahrensschritte:
d) Absteifen der Teiglinge (16);
e) Fritieren der abgesteiften Teiglinge (16) derart, daß die Teiglinge vollständig in Fritierfett (12) untergetaucht sind.

2. Verfahren nach Anspruch 1, **dadurch gekennzeichnet, daß** in Schritt e) ein Rost (18) ein Auftauchen der Teiglinge (16) aus dem Fritierfett (12) verhindert.

3. Verfahren nach Anspruch 1 oder 2, **dadurch gekennzeichnet, daß** der Brötchenteig weniger als 10% Fett und weniger als 10% Zucker pro Kilogramm Mehl enthält.

4. Verfahren nach einem der vorhergehenden Ansprüche, **dadurch gekennzeichnet, daß** der Brötchenteig im wesentlichen eifrei ist.

5. Verfahren nach Anspruch 4, **dadurch gekennzeichnet, daß** der Teig weniger als 1 Vollei pro Kilogramm Mehl enthält.

6. Verfahren nach einem der vorhergehenden Ansprüche, **dadurch gekennzeichnet, daß** der Teig ein malziger oder gesäuerter Hefeteig ist.

7. Verfahren nach einem der vorhergehenden Ansprüche, **dadurch gekennzeichnet, daß** die Teiglinge (16) in Schritt d) bei Temperaturen zwischen 6 °C und 12 °C abgesteift werden.

8. Verfahren nach einem der vorhergehenden Ansprüche, **dadurch gekennzeichnet, daß** die Teiglinge (16) in Schritt d) über einen Zeitraum von mehr als 1 Stunde abgesteift werden.

9. Verfahren nach Anspruch 8, **dadurch gekennzeichnet, daß** die Teiglinge (16) in Schritt d) über einen Zeitraum von mehr als 5 Stunden abgesteift werden.

10. Verfahren nach einem der vorhergehenden Ansprüche, **dadurch gekennzeichnet, daß** die Teiglinge (16) in Schritt e) halbfertig im Fritierfett fritiert werden, und daß die halbfertig fritierten Teiglinge nach einer Transport- oder Lagerzeit in einem Ofen vollständig ausgebacken werden.
